# EUROPEAN PATENT APPLICATION

(11) **EP 2 514 507 A1**
(43) Date of publication of application: **24.10.2012**
(21) Application number: 11163233.7
(22) Date of filing: 20.04.2011
(51) Int. Cl.: B01D 53/14

(54) **Method for depleting an acid gas from a gas stream using an amino acid solution**

(71) Applicant: Nederlandse Organisatie voor Toegepast -Natuurwetenschappelijk Onderzoek TNO, 2628 VK Delft (NL)
(72) Inventor: Goetheer, Earl Lawrence Vincent, 4554 CP Westdorpe (NL); Sanchez Fernandez, Eva, 2316 AK Leiden (NL)
(74) Representative: Jansen, Cornelis Marinus

(57) **Abstract**

The invention is directed to a method for depleting a flue gas of a gaseous acid compound.
The method of the invention comprises the steps of:
i) contacting the gas stream with an amino acid solution lean in said one or more gaseous acid compounds, thereby obtaining a solid phase comprising precipitated amino acid salt and a liquid phase comprising solution loaded with acid compound to be removed;
ii) removing part of the liquid phase; and
iii) heating the remaining mixture so as to obtain a solution semi-lean in said one or more acid compounds and a first gas comprising at least part of said gaseous acid compound.

## Description

The invention is directed to a method for depleting a flue gas from a gaseous acid compound.

Current processes for capturing and storing gaseous acids, such as carbon dioxide, are expensive and highly energy consuming. Absorption processes are seen as a good short term solution for gaseous acids mitigation, specially the green house gases such as carbon dioxide. However, this technology is characterised by high energy consumption during solvent regeneration. This normally means that pressurised steam is required to heat the absorptive solution and release the acid gases. In the case of carbon dioxide capture in a coal fired power plant, this steam is drawn directly from the process, thereby consuming approximately 15 to 30 % of the net power production and hence leading to significant energetic losses. Possibilities to overcome this problem are development of cost effective capture technology and energy-efficient integration of the capture unit into the power plant.

With respect to the energy-efficient integration, some researchers have highlighted some energy benefits of regenerating the solvent solution at higher temperatures than the common practice (120 °C).

On the other hand, solvent regeneration at relatively low temperatures (such as about 80 °C) is also of interest. One of the main reasons for this interest is the possible use of waste heat or other low cost energy sources. Low temperature regeneration system can be integrated successfully within a power plant or other large emission sources, such as refineries, cement and steel industry. Low temperature regeneration, even with the same higher energy consumption expressed as GJ per tonne of gaseous acid captured compared with high temperature regeneration, could lead to substantial cost reduction and in the case of power plants compared with the conventional capture system a much higher energy production. The reason for this is that with low temperature regeneration a clear energy benefit can be obtained.

A known process for extracting acid bases from a flue gas has been previously developed to decrease the energy use and lower investment costs (WO-A-03/095071). This process is based on based on precipitating amino acid salts and uses the principle of shifting the equilibrium of the reaction with the gaseous acid. By shifting the equilibrium more gaseous acid will be absorbed into the absorption liquid. By thermal regeneration the equilibrium is shifted back to gaseous acid and (semi) lean absorption liquid.

In the case of carbon dioxide, the carbon dioxide reacts with a deprotonated amino acid to form carbamate and a protonated amino acid according to equation (1), wherein R represents an organic group CₓH_{y} that may further comprise S, N, and O atoms, as well as halogens.

*CO*₂ + 2*⁻OOC - R - NH*₂ *↔* ⁻*OOC - R - NH - COO*⁻ + ⁻*OOC* - *R* - *NH*₃⁺ (1)

The protonated amino acid (⁻OOC-R-NH₃⁺) is a zwitter-ion with limited solubility and will easily precipitate. This will lead to an increased absorption capacity.

Carbamate is hydrolysed to form amino acid and bicarbonate according to equation (2).

*⁻OOC-R-NH-COO⁻* + *H₂O* ↔ *⁻OOC - R - NH₂* + *HCO*₃*⁻* (2)

If bicarbonate is formed, the theoretical loading can exceed 0.5 mol CO₂ per mol amino acid (as derived from equation (1)). When the amino acid is a non-hindered primary or secondary amino acid, the compound that contains the captured carbon dioxide molecule in the slurry is essentially a carbamate.

When the steric hindrance of the amino acid is increased or the resulting amino acid carbamate has low stability, reaction (2) will occur at a larger extent, thereby increasing the ratio bicarbonate/carbamate in the amino acid solution. This is advantageous for the process, because when only reaction (1) takes place, two molecules of amino acid are needed to capture a single carbon dioxide molecule. However, since one of the reaction products of reaction (2) is an amino acid, the amino acid molecules needed to capture one carbon dioxide molecule will decrease when the extension of reaction (2) is significant, thereby effectively increasing the capacity of the solvent.

The two mentioned reactions can also take place at once, resulting in the reaction in equation (3).

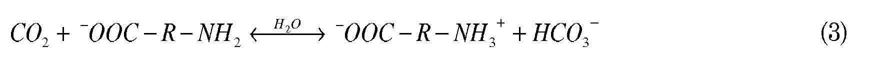

In most cases, the precipitate does not contain CO₂. However, some amino acid solutions also contain carbon species in the precipitate. Amino acid species can form precipitates that only contain zwitterion form of the amino acid, (examples are taurine, sarcosine, β-alanine), precipitates that only contain bicarbonate (example is 6-aminohexanoic acid) or precipitate both (example is proline). For instance, by precipitation of the amino acid (zwitterion) the reaction is shifted to the right. This means that more CO₂ can be loaded into the absorption liquid.

The reaction of amino acids in solution with hydrogen sulphide as a gaseous acid compound proceeds according to the reaction in equation (4).

*H₂S* + *⁻OOC - R - NH₂* ↔ *⁻OOC - R - NH*₃⁺ + *HS*⁻ (4)

In this case, the zwitterion may again precipitate, while the bisulphide remains in solution.

The reaction of amino acids in solution with sulphur dioxide as a gaseous acid compound proceeds according to the reaction in equation (5).

*SO₂* + *⁻OOC - R - NH*₂ *+ H*₂*O* ↔ *⁻OOC - R - NH*₃⁺ + *HSO*₃⁻ (5)

In this case, the zwitterion may again precipitate, while the other reaction product (HSO₃⁻) remains in solution.

In reactions (1)-(5), after absorption the acid compounds may be present as part of a carbamate, bicarbonate, bisulphite or hydrogen sulphide molecule. These molecules, in which the gaseous acid compounds captured by the amino acid solutions are contained, are referred to as captor molecules.

This process is characterised by the following key advantages. The process can be considered environmentally friendly, because amino acids are essentially non-volatile. Therefore, there is no risk of solvent evaporation that leads to higher operating costs and a potential risk to the environment. Moreover, amino acids are more resistant to oxidative degradation than amines leading to less degradation products.

In accordance with the process described in WO-A-03/095071 flue gas is fed to an absorber where it is contacted with the absorption solution. The absorber can be a structured column, spray column or both columns in series. After absorption, the absorption liquid is heated and some carbon dioxide is flashed off. A stripper is required to desorb the remaining carbon dioxide. The main drawback of this process is the more complex process with solid handling. In addition, the energy consumption and temperature level for the regeneration can be further improved.

An objective of the present invention is to improve the solvent regeneration process. The inventors found that the solvent regeneration can be improved by removing part of the liquid phase from the slurry that exits the absorber. This allows for significant solvent regeneration at low temperatures (below 100 °C, such as below 90 °C), which will decrease the overall efficiency penalty of the power plant. If higher temperatures are used for the regeneration processes, the produced gaseous acid (e.g. CO₂) will be at higher pressure, leading to an energy reduction for the subsequent compression of gaseous acid. An optimum between these two effects can be found depending on the actual emission source and availability of different qualities of energy sources.

Accordingly, in a first aspect the invention is directed to a method for depleting a gas stream in one or more gaseous acid compounds, comprising the steps of:
i) contacting the gas stream with an amino acid solution lean in said one or more gaseous acid compounds, thereby obtaining a solid phase comprising precipitated amino acid salt and a liquid phase comprising solution loaded with acid compound to be removed;
ii) removing part of the liquid phase; and
iii) heating the remaining mixture so as to obtain a solution semi-lean in said one or more acid compounds and a first gas comprising at least part of said gaseous acid compound.

In accordance with the invention part of the liquid phase of the slurry that exits the absorber is separated from the slurry. This is the key for this invention. By removing part of the absorption liquid, this surprisingly leads to significant energy savings for subsequent desorption (regeneration of solution). In particular, the temperature at which the gaseous acid compound can be stripped can be lowered to below 100 °C. This opens the possibility to use low grade heat (that may be generated elsewhere on site) to regenerate the solvent, instead of high quality steam. This enables significant gains, for example where the method of the invention is integrated in a facility such as a power plant or a refinery. Moreover, the use of amino acids makes the method of the invention more environmentally friendly than many conventional processes, because amino acids are non-volatile and more resistant to oxidation than conventional amines. Moreover, losses of the solvent are less significant for amino acids.

The terms "lean", "semi-lean" and "rich" as used herein are not meant as precise indicators of the amount of gaseous acid compounds in the gas or in the solution, but are only indicate the relative amount of the gaseous acid compounds therein. For example, a rich solution contains more gaseous acid compound than a semi-lean solution, which in turn contains more gaseous acid compound than a lean solution.

The term "amino acid" as used herein is meant to refer to all organic substances which contain one or more amine groups and one or more carboxylic acid groups and/or sulphonic acid groups. Hence, the term amino acid is meant to include, for instance, taurine which has a sulphonic acid group rather than a carboxylic acid group. The acid groups can be bound to one and the same atom of the organic substance (as is the case with the naturally occurring amino acids) or to different atoms.

In a preferred embodiment, the method of the invention comprises an additional step of stripping acid compounds from said semi-lean solution, thus obtaining a solution lean in said one or more acid compounds and a second gas comprising at least part of said gaseous acid compound.

The gas stream comprises can comprise one or more gaseous acid compounds. Preferably, the gas stream is a stream of flue gas. The one or more gaseous acid compounds can be selected from the group consisting of CO₂, SO₂, HF, H₂S and HCl. In a preferred embodiment, the one or more gaseous acid compounds comprise carbon dioxide.

The gas stream is contacted with a lean solution of an amino acid. As amino acids, all conventional water-soluble salts of amino acids can be used. Preferably used are amino acids of which the amine group is removed from the acid group by at least two or more atoms, such as carbon atoms.

Amino acids suitable for use in the method of the invention can be subdivided into amino acids not having an internal steric hindrance (with respect to the accessibility for the amine group) and the amino acids having an internal steric hindrance. To remove only carbon dioxide, the amino acids without steric hindrance are preferably used, because they react with carbon dioxide according to reaction (1). Examples of non-sterically hindered amino acids are taurine, methyl taurine, methyl-α-aminopropionic acid, *N*-(β-ethoxy)taurine, and *N*-(β-aminoethyl)taurine, as well as all other amino acids described in US-A-3 042 483, which document is herewith incorporated by reference.

In the case of sterically hindered amino acids, the absorption of carbon dioxide goes via the formation of bicarbonate according to reaction (2). Here, too, the precipitate formation offers the advantage that the equilibrium of the reaction shifts to right and that thus, on balance, more carbon dioxide will be absorbable. Besides, the bicarbonate can form salts, which also precipitate.

If the gas mixture to be cleaned contains both hydrogen sulphide and carbon dioxide, a sterically hindered amino acid is advantageously used. Because hydrogen sulphide reacts faster than carbon dioxide with the amino acid, kinetic selectivity is obtained with respect to hydrogen sulphide.

Examples of sterically hindered amino acids are the naturally occurring amino acids (the amino acids which are part of naturally occurring proteins), in which the accessibility of the amino group is limited by the presence of a carboxylic acid group at the same carbon atom. Examples thereof include alanine and glycine and derivatives thereof, such as N-methyl alanine and dimethyl glycine. Aqueous solutions with such amino acids are commercially available from Sigma-Aldrich under the tradenames of Alkazyd N (alanine), Alkazyd M (N-methyl alanine) and Alkazyd di-K (dimethyl glycine). It is also possible to use amino acids containing several amine groups per molecule, such as asparagine, glutamine, lysine and histidine.

The sterically hindered amino acids or tertiary amino acids and their salts can absorb carbon dioxide in a ratio of 1 mol carbon dioxide per mol amino group; with the non-sterically hindered amino acids and their salts the ratio can be 0.5:1, because of the carbamate remaining in solution. However, the non-sterically hindered amino acids and salts offer the advantage that they generally have a lower binding energy for carbon dioxide and are thus easier to regenerate.

Preferred for the invention are solutions of amino salts, because they are more soluble at a higher concentration than the corresponding amino acid. Preferably used are concentrations at which the salt is soluble, but at which the corresponding amino acid crystallises as a result of the reaction with the carbon dioxide. With the aid of, for instance, NaOH or KOH, the pH of the solution of the salt will be brought to an alkaline value, preferably a pH of 9-13, because the alkaline environment provides the availability of the amino groups in a free, that is to say non-protonated form.

Suitably, a solution of an amino acid salt is applied, wherein the counter ion preferably comprises one or more selected from the group consisting of Na⁺, K⁺, Li⁺ and Ca²⁺. Na⁺, Li⁺ and K⁺ are suitable counter ions to avoid precipitation of bicarbonate. More preferably, a solution of an amino acid is applied wherein the counter ion comprises K⁺. Even more preferably, the lean solution of an amino acid comprises potassium taurate. Preferably, a solution of potassium taurate in which the solution contains a concentration of more than 0.2 mol/l of the salt is used is.

The contacting suitably occurs in one or more absorbers. For efficient absorption, the contacting between the gas mixture and the liquid or slurry comprising the amino acids preferably takes place in a containing that allows for optimal contact and long a contacting time between the gas mixture and the liquid or slurry. Examples of suitable containers include packed columns and tray columns. On the other hand, to efficiently handle precipitation, a container is preferred that is able to process slurries, such as spraying contact devices and bubbling contact devices. By partially separating these two processes, highly concentrated solutions of amino acids can be used with conventional equipment and high net loadings can be achieved. Accordingly, in a preferred embodiment two different absorption regimes (precipitating absorption and non-precipitating absorption) are, at least in part, separated in two separate contactors. It is highly preferred that the two separate contactors are different contactor types. Preferably, the contacting step comprises a first contacting stage wherein the contact occurs as liquid droplets in a continuous gas phase or as gas bubbles in a continuous liquid phase and a second contacting stage wherein the contact occurs in liquid film. In practice the first contacting stage can, for instance, comprise a spray column and/or bubble column, and/or the second contacting stage can comprise packings.

In the contacting stage, acid compounds are absorbed by the slurry, resulting in precipitation of the amino acids present in the slurry. The slurry comprises both a solution of an amino acid and a solid salt of the same amino acid. The solid salt of the same amino acid may be in any form, e.g. crystalline or amorphous. Preferably, the solid salt comprises the zwitterion of the amino acid. Preferably, the concentration of the solid salt in the slurry is 1-6 M, more preferably 4-6 M. Because gaseous acid compounds are absorbed, the gas stream is depleted in gaseous acid compounds, resulting in a purified gas stream. The purified gas stream may be collected from the contacting container, such as from the one or more absorbers.

In step ii) of the method of the invention, part of the liquid phase is removed from the mixture of solid phase and liquid phase that is obtained in contacting step i). The part that is removed may be, for example the volume percentage of the part of the liquid phase removed in ii) is 5-60 vol.% of the total volume of the liquid phase in the mixture of solid phase and liquid phase obtained in step i), preferably 10-50 vol.%, such as 15-45 vol.%.

Removing part of the liquid phase may be done by any suitable solid-liquid separator. Some examples include the use of a centrifuge, a hydrocyclone, a filter, and/or a settler. A fraction of the liquid supernatant can then be separated from the remainder of the slurry.

At least part of the liquid phase that is removed in step ii) may be recycled to contacting step i).

Without wishing to be bound by theory, the inventors believe that by removing part of the liquid phase from the slurry mixture, the pH of the mixture is decreased after dissolving the amino acid crystals at higher temperatures in step iii, which allows a subsequent lower operating temperature of the stripper. A lowering of the pH enhances the release of gaseous acid compounds. This is basically a combined pH-shift and thermal regeneration.

After having removed part of the liquid phase in step ii), remaining slurry (mixture of solid phase and liquid phase) is heated so as to obtain a solution semi-lean in said one or more acid compounds and a first gas comprising at least part of said gaseous acid compound. This heating is normally performed in a heat exchanger. During the heating step precipitated zwitterions and solid salt of the amino acid dissolve, thereby releasing part of the acid compounds as a gas and decreasing the loading of the slurry. This obtained loaded slurry is referred to as being partially regenerated. If after heating there are still solids left in the slurry, these may be removed, e.g. by making use of a filter.

Preferably, the mixture is heated to a temperature of 60 °C or more, more preferably to a temperature of 65 °C or more, such as at a temperature of 70 °C or more, or a temperature in the range of 70-90 °C. The mixture may be heated to temperatures higher than 90 °C using low pressure steam, but then producing CO₂ at higher pressure, leading to lower compression energy costs.

Part of the semi-lean solution that is obtained in heating step iii) may be recycled to contacting step i). In an embodiment, the semi-lean solution is mixed with the liquid phase that is removed in step ii) and then both are recycled to contacting step i).

Upon having heated the mixture it can be fed to a stripper wherein the solution of amino acid can be thermally regenerated by stripping gaseous acid compounds from the semi-lean solution in a stripping process. Hence, the method of the invention may comprise the additional step of stripping acid compounds from the semi-lean solution, thus obtaining a solution lean in said one or more acid compounds and a second gas comprising at least part of said gaseous acid compound. In this process, a solution lean in acid compounds and a second gas comprising gaseous acid compounds are obtained. Thus, the slurry is regenerated into an amino acid solution suitable for absorption of gaseous acid compounds.

The thermal regeneration in the stripper can advantageously be performed at a low temperature, typically below the boiling point of the solvent. Preferably, the stripper is operated at a temperature of less than 100 °C, such as at a temperature of 95 °C or less. More preferably, the stripper is operated at a temperature of 90 °C or less, such as at a temperature in the range of 70-100 °C.

The regenerated solution can once more be recycled to the contacting step i), optionally combined with the semi-lean solution and/or the liquid phase that is removed in step ii).

The solid in the slurry may further comprise one or more inert particles that allow the amino acid to crystallise on the surface thereof. Such particles suitably have a low solubility in the amino acid solution under the operating conditions. These particles may increase the contact area in the slurry. The particles may also help control the size of the precipitate. Furthermore, the particles may promote precipitation in the slurry, by increasing the number of nucleation sites in the slurry on the one hand, and by providing more energetically favourable nucleation sites compared to sites on a precipitate particle on the other hand. The particles may be inorganic materials, such as bentonite, silica particles, silicates or diatoms. The particles may also be organic particles, such as cellulose, stearate, guar gum, xanthan gum, hydroxypropyl cellulose, microcrystalline cellulose, silicified cellulose, croscarmellose, croscarmellose sodium or microcrystalline cellulose. Preferred shapes of the particles are spherical or cubic, because the tendency of clogging is reduced by using these shapes. By using homogeneous or heterogeneous templates, the morphology of the precipitates can be controlled. Thus, the presence of, for example, needle shaped precipitates can be avoided. Furthermore, a milling pump can be added to the first container to make smaller particles and increase thus the surface area helping the precipitation.

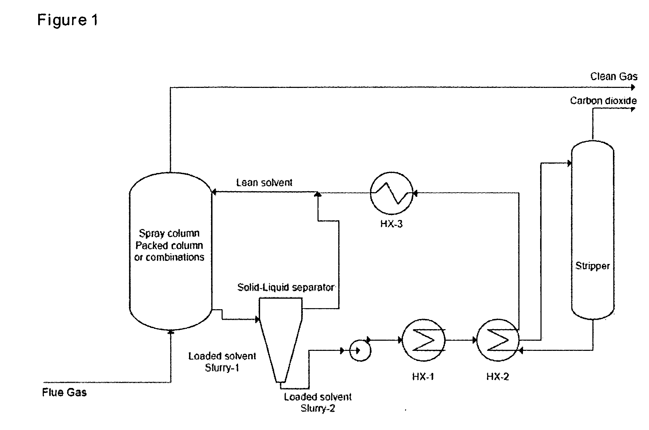

An embodiment of the invention is illustrated in Figure 1. In accordance with the embodiment of Figure 1, a flue gas is introduced into an absorber in the form of a spray column, a packed column or combinations thereof, together with an amino acid solution lean in gaseous acid compounds (lean solvent). Gaseous acid compounds are absorbed from the flue gas by the lean solvent thereby obtaining clean gas (from which gaseous acid compounds have been removed) and loaded solvent (Slurry-1). Part of the liquid phase is removed from the loaded solvent in a solid-liquid separator. The removed liquid phase is recycled to the lean solvent that enters the absorber, while the remaining loaded solvent (Slurry-2) is pumped to heat exchangers HX-1 and HX-2. In a stripper, carbon dioxide is stripped from the loaded solvent. Lean solvent is then returned to the absorber via heat exchanger HX-3.

### Example

The following example shows the effect of supernatant removal on a loaded slurry of a basic amino acid such as taurine. Samples of aqueous potassium taurate were loaded up to saturation with 100 % pure CO₂. After loading to the maximum rich loading the supernatant was partially separated from the sample. The resulting slurries were regenerated by heating up to a known temperature and blowing a constant flow of pure nitrogen in order to strip out the CO₂.

| Liquid removed (vol.%) | Taurine conc. [mol/l] | Temperature (°C) | Rich loading (mol/mol) | Lean loading (mol/mol) |
|---|---|---|---|---|
| 0 | 4 | 74.1 | 0.65 | 0.36 |
| 21 | 4.3 | 77.1 | 0.65 | 0.30 |
| 42 | 4.9 | 76.0 | 0.65 | 0.17 |
| 0 | 4 | 89.7 | 0.65 | 0.24 |
| 21 | 4.3 | 95.4 | 0.65 | 0.13 |
| 42 | 4.9 | 93.7 | 0.65 | 0.09 |

As shown in the table, removing a fraction of the supernatant increases the concentration of amino acid species. Moreover, the fraction of CO₂ removed from each sample increases for those samples with less supernatant. This is reflected in a decrease of the lean loading at similar desorption temperatures.

## Claims

1. Method for depleting a gas stream in a gaseous acid compound, comprising the steps of:
i) contacting the gas stream with an amino acid solution lean in said one or more gaseous acid compounds, thereby obtaining a solid phase comprising precipitated amino acid salt and a liquid phase comprising solution loaded with acid compound to be removed;
ii) removing part of the liquid phase; and
iii) heating the remaining mixture so as to obtain a solution semi-lean in said one or more acid compounds and a first gas comprising at least part of said gaseous acid compound.

2. Method according to claim 1, comprising the additional step of:
iv) stripping acid compounds from said semi-lean solution, thus obtaining a solution lean in said one or more acid compounds and a second gas comprising at least part of said gaseous acid compound.

3. Method according to claim 1 or 2, wherein the gaseous acid compound comprises one or more selected from the group consisting of CO₂, SO₂, HF, H₂S, and HCl, preferably the gaseous acid compound comprises CO₂.

4. Method according to any one of claims 1-3, wherein counter ions used in the amino acid solution are selected from the group consisting of Na⁺, K⁺, Li⁺, and Ca²⁺, preferably K⁺ is used as a counter ion in the amino acid solution.

5. Method according to any one of claims 1-4, wherein at least part of the liquid phase removed in step ii) is recycled to contacting step i).

6. Method according to any one of claims 1-5, wherein at least part of the semi-lean solution obtained in step iii) is recycled to contacting step i).

7. Method according to claim 6, wherein the semi-lean solution is mixed with the liquid phase removed in step ii) and then recycled to contacting step i).

8. Method according to any one of claims 2-6, wherein at least part of the lean solution obtained in step iv) is recycled to contacting step i).

9. Method according to claim 8, wherein the lean solution is mixed with the liquid phase removed in step ii) and then recycled to contacting step i).

10. Method according to any one of claims 1-9, wherein the volume percentage of the part of the liquid phase removed in ii) is 5-60 vol.%, preferably 10-50 vol.%, such as 15-45 vol.%.

11. Method according to any one of claims 2-10, wherein the stripping in step iv) is performed at a temperature below the boiling temperature of said semi-lean solution, preferably 100 °C or less, more preferably 95 °C or less, such as in the range of 60-90 °C.

12. Method according to any one of claims 1-11, wherein in step iii) the remaining mixture is heated to a temperature of 60 °C or more, preferably 65 °C or more, more preferably 70 °C or more, such as in the range of 70-90 °C.

13. Method according to any one of claims 1-12, wherein contacting step i) comprises a first contacting stage wherein the contact occurs as liquid droplets in a continuous gas phase or as gas bubbles in a continuous liquid phase and a second contacting stage wherein the contact occurs in liquid film.

14. Method according to claim 13, wherein
- said first contacting stage comprises a spray column and/or bubble column; and/or
- said second contacting stage comprises packings.
